# EUROPEAN PATENT APPLICATION

(11) **EP 1 911 644 A2**
(43) Date of publication of application: **16.04.2008**
(21) Application number: 07380232.4
(22) Date of filing: 08.08.2007
(51) Int. Cl.: B60T 7/06, B60T 11/18, G05G 1/14

(54) **Transmission mechanism, use thereof and automotive vehicle comprising said mechanism**

(30) Priority: 27.09.2006 ES 200602457
(71) Applicant: Autotech Engineering A.I.E., 46400 Amussafes (Valencia) (ES); Gestamp Vigo, S.A., 36400 Porriño (Pontevedra) (ES); Gestamp MB Irametal, S.A., 46400 Almussafes (Valencia) (ES)
(72) Inventor: Martins, Gil, 46400 Almussafes (Valencia) (ES); Darmon, François, 46400 Almussafes (Valencia) (ES); Pradera Angulo, Borja, 46400 Almussafes (Valencia) (ES)
(74) Representative: Carpintero Lopez, Francisco

(57) **Abstract**

The present invention relates to a transmission mechanism, a use thereof and an automotive vehicle comprising said mechanism, allowing a safe transmission of movement comprising a transmission rod (2), configured to rotate about a central shaft (9), which is fixed in a first area (6) to a pedal (1) and in a second area (8) to a link rod (3), said first area (6) having a non-circular section and being configured to be tightly housed in a first housing (5) that said pedal (1) has and to allow a transmission of a pivoting movement of the pedal (1), about the central shaft (9), to the transmission rod (2) and the reverse, even in the absence of welding between said pedal (1) and said transmission rod (2).

## Description

### OBJECT OF THE INVENTION

A first aspect of the present invention relates to a transmission mechanism, a second aspect relates to a use thereof and, finally, a third aspect relates to an automotive vehicle comprising said mechanism; said three aspects being applicable in the mechanical industry, and preferably in the automotive field.

The invention allows a transmission of movement by means of a mechanism the elements of which are linked such that they have a restricted relative movement among one another, being particularly useful for its incorporation in a pedal transmission mechanism in an automotive vehicle, for example in a brake pedal, in which case the braking function of the automotive vehicle is assured, with the subsequent increase in safety when traveling in such vehicle.

### BACKGROUND OF THE INVENTION

Today there is a wide variety of transmission mechanisms in which the transmission of movement between a point of origin of a first element or part which is fixed at an opposite end to the end of said point of origin to a transmission rod which is only able to rotate about its own central shaft is required, said transmission rod being fixed to a second element to which it transmits its movement such that the second element performs a pivoting movement when it receives movement from the first element.

These mechanisms are used in any type of applications, having slight structural differences depending on the configuration and arrangement of the first element generating the movement of the transmission mechanism, which is usually configured to be actuated by an operator or to receive a movement from another mechanism. In both cases, said first element can be both a lever, in which case it could be actuated with a hand, and a pedal, in which case it could be actuated by an operator's foot.

A practical application of this type of transmission mechanisms can be found today in the field of automotive vehicles, which comprise a pedal mechanism located in the vehicle interior, usually in the driver's position, said pedals being configured to be actuated by the driver's feet.

One of the pedals in an automotive vehicle is a brake pedal which, by means of the actuation thereof, is configured to actuate a brake cylinder comprising a hydraulic system housed in an engine compartment of the vehicle, since said brake pedal is configured to transmit its movement to said brake cylinder.

Another one of the pedals in a manual transmission automotive vehicle is a clutch pedal, the actuation of which is similar to the actuation of the brake pedal, i.e. when the clutch pedal is actuated by the driver, it is configured to actuate a clutch cylinder also housed in the engine compartment.

The transmission of movement between each of said brake pedal and clutch pedal and the corresponding brake cylinder and clutch cylinder is carried out by means of mechanisms comprising a transmission rod acting on the corresponding cylinder, transmitting thereto the movement received from the pedals when the driver acts thereon.

Today there is a type of automotive vehicles which are intended for driving lessons commonly referred to as driving school vehicles, in which the co-driver's seat or position, located next to the driver's position, is used by a teacher, so said co-driver's position has the same pedals as the driver's position, which is intended for a student, so the teacher can correct the student while driving. In said driving school vehicles, a brake pedal is located on the right side of the vehicle.

This same feature can be found in the case of the so-called right-hand drive vehicles, in which, in contrast with the most common case in which the driver's position is on the left side of the vehicle, the driver's position is on the right side of the vehicle, said right-hand drive vehicles being particularly designed for driving on the left side of the road, as occurs today in the United Kingdom for example.

The problem with the two types of vehicles described above, in which the pedals, for example a brake pedal, are on the right side of the vehicle, is that in said pedal transmission mechanisms the transmission rod is located on the left side of the corresponding pedal, for example the brake pedal. This problem also occurs in those vehicles in which, as a result of the location of a steering system column of the vehicle, there is not enough room.

For the purpose of solving the drawbacks set forth in the preceding paragraph, said pedal transmission mechanisms currently comprise a link rod, or movement transfer element, which is fixed to the transmission rod for the purpose of transmitting the actuation movement carried out by the driver to the hydraulic system comprising, for example, the brake cylinder in the area of the engine of the vehicle.

To that end pedal transmission mechanisms used today as described in the preceding paragraph for the case of the brake pedal comprise a brake pedal which is fixed to the transmission rod by means of welding, like the transmission rod and the link rod, said link rod being configured to transmit or transfer its movement to the hydraulic system of the servo brake.

This type of transmission mechanisms has a serious drawback in relation to the safety of the transmission, which is particularly critical in the event that the mechanism is installed in a brake pedal of an automotive vehicle, since it could involve the loss of the braking function thereof.

Said drawback consists of the fixing only consisting of welding the elements together, whereby when there is a failure with any of the two welds, either between the pedal and the transmission rod or between the transmission rod and the link rod, for example when the welding bead breaks as a result of not resisting the torsional stress the transmission rod is subjected to, it causes a total loss of the vehicle breaking function, which is a vitally important safety function for the vehicle, with the serious consequences it entails, possibly causing an accident, these mechanisms having no additional element assuring the transmission of movement in such case.

### DESCRIPTION OF THE INVENTION

A first aspect of the present invention relates to a transmission mechanism the elements of which have a restricted relative movement among one another, allowing their incorporation in a transmission pedal mechanism in an automotive vehicle, such as for example in a brake pedal, for the purpose of assuring the braking function of the automotive vehicle, even in the event a fixing by means of welding the elements of the transmission should fail.

The transmission mechanism object of the invention comprises a transmission rod which is configured to rotate about a central shaft of said transmission rod, any other degree of freedom being restricted. Said transmission rod is fixed in a first area, preferably located in an end area, to a pedal, preferably in an end area said pedal.

In addition, the transmission rod is fixed in a second area, preferably in an intermediate area of said transmission rod, to a link rod, or transfer element, configured to perform a pivoting movement about the central shaft when the pedal is actuated. The direction of the link rod is chosen appropriately according to the direction in which the movement of the pedal is to be transmitted, being able to be oriented for example parallel to the pedal, in the event that a transfer movement is required.

However, according to the invention, the first area of the transmission rod of the mechanism has a non-circular section and is configured to be tightly housed in a first housing that the pedal has, such that since it is tightly housed, i.e. since the first area is inserted in the first housing of the pedal, both with a section other than circular, any relative movement between them is restricted, such that any movement of the pedal will be transmitted to the transmission rod, given that due to the shape of the sections both parts cannot have relative movement, even in the absence of any other fixing means, such as a weld for example.

The first area is thus configured to allow transmission of a pivoting movement of the pedal, about the central shaft, to the transmission rod, and the reverse, i.e. any movement of the transmission rod will be transmitted to the pedal, which allows the pedal to recover a stand-by position when it is not being actuated by the driver.

The mechanism of the invention thus achieves a safe transmission of movement in the transmission rod by means of its special shape, not being necessary to fix the elements by means of welding.

The possibility of the second area, like the first area, having a non-circular section is also contemplated, said second area of the transmission rod being configured to be tightly housed in a second housing that the link rod has and to allow a transmission of the rotational movement about its own central shaft from the transmission rod to the link rod, and the reverse.

Both the first housing of the pedal and the second housing of the link rod thus have a section with the complementary shape of the first area and the second area, respectively, as corresponds to them in the transmission rod, for the purpose of assuring that no relative movement occurs, i.e. slipping between said transmission rod and the pedal or between said transmission rod and the link rod, i.e. for the purpose of assuring said transmission of movement, even in the absence of any other fixing means.

Although it is not necessary, as explained, the possibility of the transmission rod being welded to the pedal, in the first area, and to the link rod, in the second area is contemplated in the mechanisms described above, this being possible given the features of the fixing between the elements of the mechanism of the invention, whereby the fixings of the elements comprised in the mechanism would be doubled, as would the safety thereof.

The possibility of the second housing being open, being configured to be tightly housed in the second area is also contemplated, i.e. it allows housing the transmission rod from a direction perpendicular to the central shaft of said transmission rod.

According to the mechanism of the preceding paragraph, in a preferred embodiment thereof, the possibility of the second area having two parallel planar faces is contemplated, being housed in the transmission rod and transmitting to it its movement in the same way as a wrench tool transmits its movement to the head of a nut.

The possibility of the first joining area having two parallel planar faces is also contemplated.

Although all the possibilities have not been described in detail, it is obvious that the section of the first area and the second area can have a shape that comprises at least two parallel faces, or any type of quadrangular section, i.e. square, rectangular or rhombic, as well as hexagonal, oval or any configuration other than circular.

As mentioned above, the possibility of the transmission mechanism proposed by the invention being installed in an automotive vehicle, specifically in a pedal transmission, such as for example in a brake pedal or in a clutch pedal, is contemplated.

The pedal of the mechanism is preferably a brake pedal of the automotive vehicle, whereas the link rod is configured to transmit its pivoting movement, about the central shaft, to the engine of the vehicle.

The mechanism of the invention thus allows the driver to use the emergency brake causing the vehicle to stop, assuring the driver's and occupants' safety, even in the event that one of the welds in the transmission rod should fail, for example, due to excessive torsional stress, as a result of the abrupt braking.

In addition, a second aspect of the present invention relates to a use of any of the previously described transmission mechanisms in an automotive vehicle.

Finally, a third aspect of the present invention relates to an automotive vehicle comprising any of the previously described transmission mechanisms.

Therefore, according to the described invention, the transmission mechanism, the use thereof and an automotive vehicle comprising said mechanism proposed by the invention, are an advance with regard to the mechanisms used up until now and solve in a fully satisfactory manner the drawbacks set forth above so as to assure a transmission of movement between the elements of the mechanism, even in the absence of any other fixing means, working properly even in the event that any of the welds between elements fails, allowing the detection of a vehicle comprising the mechanism of the invention, which manages to assure the vehicle braking function.

### DESCRIPTION OF THE DRAWINGS

To complement the description being made and for the purpose of aiding to better understand the features of the invention according to a preferred practical embodiment thereof, a set of drawings is attached to said description as an integral part thereof which, with an illustrative and nonlimiting character, shows the following:

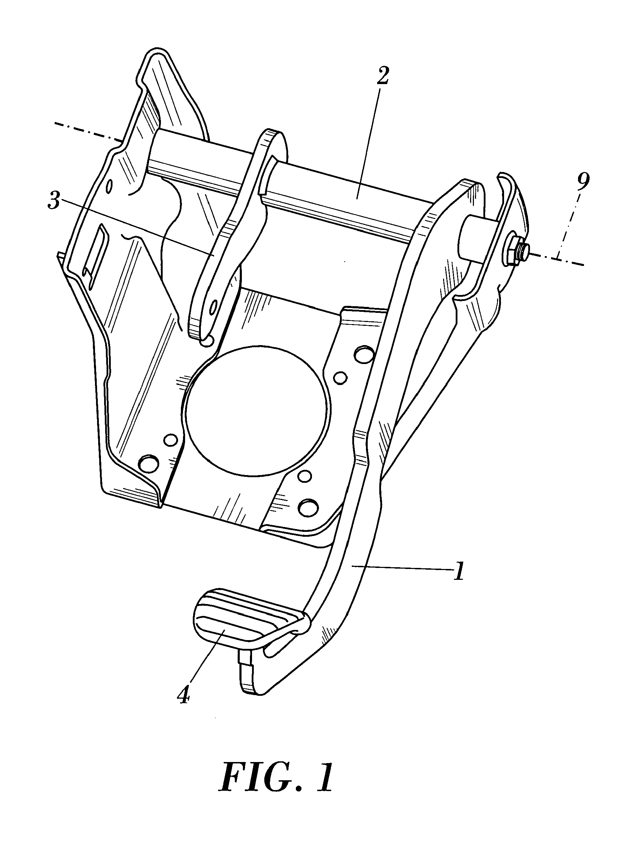

Figure 1 shows a perspective view of the transmission mechanism object of the invention.

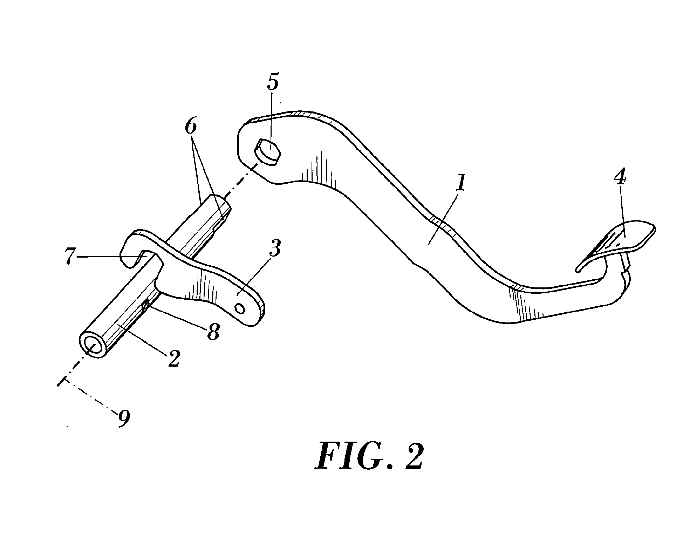

Figure 2 shows an exploded perspective view of the transmission mechanism shown in the previous figure from another point of view.

### PREFERRED EMBODIMENT OF THE INVENTION

In view of the mentioned figures, it can be seen how in one of the possible embodiments of the first aspect of the invention, the transmission mechanism comprises a transmission rod (2) which is configured to rotate about a central shaft (9) of said transmission rod (2), any other degree of freedom being restricted.

Said transmission rod (2) is fixed in a first area (6), preferably located in an end area, to a pedal (1).

In addition, the transmission rod (2) is fixed in a second area (8) to a link rod (3) configured to perform a pivoting movement about the central shaft (9).

According to the invention, the first area (6) of the transmission rod (2) has a non-circular section and is configured to be tightly housed in a first housing (5) that the pedal (1) has.

The first area (6) is configured to allow a transmission of a pivoting movement of the pedal (1), about the central shaft (9), to the transmission rod (2), and the reverse.

The possibility of the second area (8) having a non-circular section is contemplated, being configured to be tightly housed in a second housing (7) that the link rod (3) has and to allow a transmission of the rotational movement of the transmission rod (2) to the link rod (3), and the reverse.

The possibility of the transmission rod (2) being welded to the pedal (1) in the first area (6) and to the link rod (3) in the second area (8) is also contemplated.

The possibility of the second housing (7) being open, being configured to be tightly housed in the second area (8), is also contemplated.

According to the mechanism of the preceding paragraph, in a preferred embodiment thereof the possibility of the second area (8) having two parallel planar faces is contemplated.

The possibility of the first joining area (6) having two parallel planar faces is also contemplated.

As mentioned above, the possibility of the transmission mechanism proposed by the invention being installed in an automotive vehicle is contemplated, in which case the pedal (1) of the mechanism is preferably a brake pedal of the automotive vehicle, whereas the link rod (3) is configured to transmit its pivoting movement, about the central shaft (9), to the engine of the vehicle.

In addition, a second aspect of the present invention relates to a use of any of the previously described transmission mechanisms in an automotive vehicle.

In the case depicted in the figures, the transmission mechanism is configured to be installed in a vehicle in which the brake pedal is on the right side of the vehicle and therefore the transmission rod is to the left of the pedal.

Finally, a third aspect of the present invention relates to an automotive vehicle comprising any of the previously described transmission mechanisms.

In view of this description and set of drawings, a person skilled in the art will understand that the embodiments of the invention that have been described can be combined in many ways within the object of the invention. The invention has been described according to some preferred embodiments thereof, but it will be evident for a person skilled in the art that multiple variations can be introduced in said preferred embodiments without going beyond the object of the claimed invention.

## Claims

1. A transmission mechanism comprising a transmission rod (2), configured to rotate about a central shaft (9) of said transmission rod (2), which is fixed in a first area (6) to a pedal (1) and in a second area (8) to a link rod (3), **characterized in that** the first area (6) has a non-circular section and is configured to be tightly housed in a first housing (5) that said pedal (1) has and to allow a transmission of a pivoting movement of the pedal (1), about the central shaft (9), to the transmission rod (2) and the reverse.

2. A transmission mechanism according to claim 1, **characterized in that** the second area (8) has a non-circular section and is configured to be tightly housed in a second housing (7) that the link rod (3) has and to allow a transmission of the rotational movement of the transmission rod (2) to the link rod (3) and the reverse.

3. A transmission mechanism according to the previous claims, **characterized in that** the transmission rod (2) is welded to the pedal (1) in the first area (6) and to the link rod (3) in the second area (8).

4. A transmission mechanism according to any of claims 2 and 3, **characterized in that** the second housing (7) is open, being configured to be tightly housed in the second area (8).

5. A transmission mechanism according to claim 4, **characterized in that** the second area (8) has two parallel planar faces.

6. A transmission mechanism according to any of the previous claims, **characterized in that** the first joining area (6) has two parallel planar faces.

7. A transmission mechanism according to any of the previous claims, **characterized in that** it is installed in an automotive vehicle.

8. A transmission mechanism according to claim 7, **characterized in that** the pedal (1) is a brake pedal.

9. A mechanism according to any of claims 7 and 8, **characterized in that** the link rod (3) is configured to transmit its pivoting movement, about the central shaft (9), to the engine of the vehicle.

10. Use of a transmission mechanism according to any of claims 1 to 6, **characterized in that** it is in an automotive vehicle.

11. An automotive vehicle **characterized in that** it comprises a transmission mechanism according to any of claims 1 to 6.
